# EUROPEAN PATENT APPLICATION

(11) **EP 1 835 165 A1**
(43) Date of publication of application: **19.09.2007**
(21) Application number: 07003280.0
(22) Date of filing: 16.02.2007
(51) Int. Cl.: F02M 25/022

(54) **Injection device and procedure for feeding diesel engines with hydro-alcoholic blends**

(30) Priority: 15.03.2006 IT MI20060465
(71) Applicant: PROMETEUS di Daniele Quartieri, 20077 Melegnano MI (IT)
(72) Inventor: Quartieri, Daniele, 26839 Zelo Buon Persico (Lodi) (IT)
(74) Representative: Pipparelli, Claudio

(57) **Abstract**

An injection device for feeding turbo-compressed diesel engines with hydro-alcoholic solutions, comprises a compressor which takes in air from the outside of the engine and discharges it at a pressure and temperature higher than the atmospheric value, a connecting manifold between said engine, a heat exchanger which receives said heated air volume and returns it at a lower temperature with respect to the inlet value, an injection pump which collects said hydro-alcoholic solution from a tank and sends it under pressure to a pulverizer, an injector which pulverizes said solution and injects it into said air volume and is characterized in that said injector is inserted in said manifold in a point between said heat exchanger and the inlet of said cylinder.

## Description

The present description relates to engines, more specifically diesel-type engines. More specifically, the invention relates to a method and a mechanical group for improving the yield, in general terms but with particular reference to the power supplied, the polluting emissions and consumption during running, as well as the costs of the device and life of the engine, of a turbo-compressed diesel engine.

The functioning of diesel engines is well-known. The air sucked into an engine cylinder is compressed during the stroke of the piston towards the head of the cylinder: when the stroke is close to the upper dead point, an amount of finely pulverized gas oil is injected into the cylinder and, due to the temperature reached by the air and/or by means of suitable devices, ignites and burns, producing combustion gases which, as a result of their expansion, produce energy pushing the piston towards the lower dead point thus generating the rotation of the engine shaft.

The pressure and temperature of the blend of air and fuel inside the cylinder reach relatively high values, in the order of 0.7 bars and at least 100°C, which considerably increase during the combustion phase and therefore require engines with a very strong mechanical structure and consequently extremely heavy, which means that they are mainly destined for naval use or heavy duty transport, i.e. vehicles having large dimensions and considerable power.

In order to enhance the performances of these engines, so as to reach a reduction in their size, it has been normal practice, for a long time, to feed the induction phase of the cylinders with air already compressed by means of a turbine (turbo-compressor) and mixed with a hydro-alcoholic solution, i.e. with a solution of water and an alcohol, normally consisting of methanol and/or ethanol, which has proved to be very convenient for this use. Initially the above procedure was applied mainly to engines destined for sport competitions and was subsequently used in all diesel engines, also in vehicles having a moderate power. Normally the alcohol percentage in the hydro-alcoholic solution ranges from 10 to 12%.

The function of water is to decrease the air temperature in the intake manifolds, considering the high amount of heat absorbed by water during evaporation, whereas the function of alcohol is to compensate the negative effect of water on the power supplied by the engine.

The most recent engines also include a heat exchanger situated on the intake manifold of the cylinders, in order to lower the temperature of the mixture air/solution at the outlet of the turbo-compressor, thus increasing the mass and obtaining a better control of the temperature of the mixture sucked by the engine cylinder.

This procedure, in addition to an unquestionable efficacy, has the drawback of the amount of solution used: this can vary, in fact, from 50% to 500% of the fuel consumption, passing from a low engine regime to extra-urban use, characterized by high speed and sudden accelerations.

As an example, a turbo-compressed engine having a cylinder displacement of 1,300 cc can have a consumption of 4.5 liters of gas oil and 9 liters of hydro-alcoholic solution every 100 km. It follows that, in order to be fully independent, the vehicle under examination must be equipped, in addition to the usual tank of 50-60 liters of gas oil, with a second tank with not less than 100 liters of hydro-alcoholic solution. The installation of this additional tank on the vehicle involves considerable problems relating to weight and volume.

The Applicant observed that current turbo-compressed engines have reached a performance level which cannot be further increased without causing an analogous increase in the consumptions and polluting emissions, and that, against these high performances, they have a series of problems which limit their wide diffusion on the market, in particular, said considerable consumption of hydro-alcoholic solution with respect to the consumption of gas oil.

In view of what is specified above, the Applicant has found a new feeding system for turbo-compressed engines, which advantageously modifies the present situation, said system comprising of a new arrangement of structural elements, per se already known, which represents a new injection procedure for feeding diesel-type engines, capable of allowing the engine to run at lower pressure and temperature values, with the same performances, or considerably increase the performances, maintaining the present functioning conditions almost unchanged. This new device and procedure allows polluting emissions to be considerably decreased, reducing the maintenance and running costs of the system, the fuel consumption and increasing the life of the engine due to lower running stress.

An object of the present invention therefore relates to a procedure for feeding a diesel cycle turbo-compressed engine with a hydro-alcoholic solution, comprising the phases of:
- sucking a volume of air from the outside of the engine,
- compressing said sucked air volume at a higher pressure with respect to atmospheric pressure,
- cooling said volume of compressed air to a temperature lower than that reached after said compression,
- sucking said cooled air volume into a combustion cylinder of said engine,
characterized in that it comprises the phase of injecting a hydro-alcoholic solution into said cooled air volume before the intake of said cooled air volume into said cylinder.

A second aspect of the invention relates to an injection device for feeding turbo-compressed diesel engines with hydro-alcoholic solutions, comprising:
- a compressor which sucks air from the outside the engine and discharges it at a temperature and pressure higher than the atmospheric values,
- a connecting manifold between said compressor and said engine, which carries said compressed air to a cylinder of said engine,
- a heat exchanger which receives said heated air volume and returns it at a temperature lower than the inlet temperature,
- an injection pump which collects said hydro-alcoholic solution from a tank and sends it to an injector, under pressure,
- an injector which pulverizes said solution and injects it into said air volume,
characterized in that said injector is inserted into said manifold, in a point between said heat exchanger and the inlet of said cylinder.

The present invention can, in any case, be better understood with the help of the following description and enclosed figures, which are provided for purely illustrative and non-limiting purposes, in which:
- figure 1 shows a schematic form of the feeding device according to the invention,
- figure 2 shows the characteristics curves of an engine fed in a traditional way and by means of the device of figure 1, respectively,
- figure 3 shows the graphic time/velocity of a normalized test cycle for analysing certain characteristics of an engine fed by means of the device of figure 1.

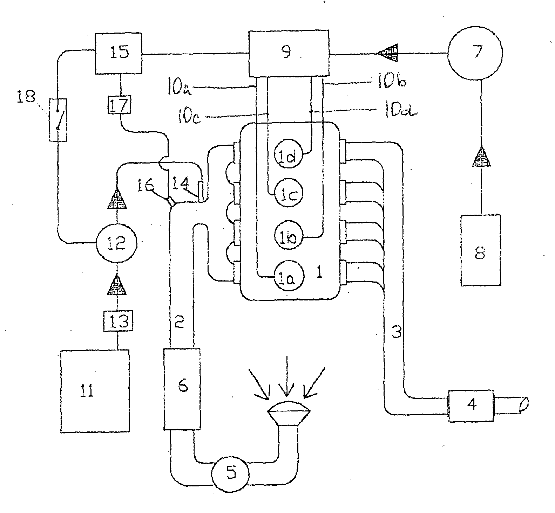

Figure 1 schematically shows an engine 1, of the diesel type, comprising four cylinders 1a, 1b, 1c, 1d, connected to each other in a known manner, therefore not shown, by a single engine shaft. The running cycle comprises four phases, induction, compression, expansion, exhaust, of which only the expansion phase produces work; the four cylinders operate with faulty timing, so that, in any moment of the cycle, at least one cylinder is in the phase which produces work.

The cylinders take in air through an intake manifold 2 and discharge the combusted gas through an exhaust manifold 3 equipped at the end tract of a silencer 4 for the abatement of the temperature of said gas and the volume of polluting agents which are sent into the atmosphere.

The intake manifold 2 is fed by a turbo-compressor 5 which takes in air from the outside and sends it, under a pressure of about 1.5 bar and temperature of 115-140°C to a heat exchanger 6 which reduces its temperature to a value of between 80 and 100 °C, subsequently sending it to the cylinders. A pump 7 takes in the fuel, normally gas oil, from a tank 8 and sends it to a pulverizer 9 which feeds each cylinder by means of a suitable, separate injector 10a, 10b, 10c, 10d. respectively.

The feeding device according to the invention comprises a tank 11 for the hydro-alcoholic solution and a pump 12 which sucks said solution, preferably through a filter 13, and injects it into the intake manifold 2 by means of an injector 14, inserted in the manifold 2, in a point between the exchanger 6 and the inlet of the engine 1, preferably as close as possible to said inlet point. The injection pressure of said solution preferably ranges from 4 bars to 15 bars. The preferred value of this pressure is established by selecting for the injector 14 a pulverizing nozzle having a hole having a fixed diameter: preferably a series of nozzles are used having a hole diameter ranging from 0.3 to 1 mm, with an increase of one tenth of a millimetre from one nozzle to the subsequent one.

The amount of solution, injection cycles and intervention times are preferably controlled by an electronic central board 15 which processes a signal transmitted by a pressure sensor 16 inserted in said intake manifold in a point preferably upstream with respect to the injector 14, and possibly connected to said central board by means of a transducer 17.

The electronic central board 15 is preferably the same as that which controls the injection of gas oil, thus coordinating the two injection cycles, that of gas oil and that of the solution.

The functioning of the engine can be summarized in this way. During running, under peaceful conditions, at a moderate and substantially constant speed, the device remains inactive, as soon as a sudden increase in power is required, however, due to an increase in speed and/or acceleration, the turbo-compressor becomes operative, causing a sudden and considerable increase in pressure and temperature of the air volume at the inlet and consequently also at the outlet of the heat exchanger.

The sensor detects this increase in pressure and/or temperature and commands the intervention of the pump 12, which injects the established quantity of hydro-alcoholic solution into the sucked flow of air at the outlet of the heat exchanger; this injection of the solution, at a temperature lower than that of the cooled air at the outlet of the heat exchanger, further cools the volume of air sucked by the engine, thus considerably increasing its mass.

The injection is maintained until the power required, and therefore the air pressure downstream of the heat exchanger, has decreased to the initial value or, in any case to a pre-established threshold value.

More specifically, the threshold value for the intervention of the pump 12 is fixed by the user according to necessity and desires.

The same components used in the known devices can be used for the construction of the device: in any case a technical person skilled in the field will not have any difficulty in selecting the most convenient component (pumps, injectors, sensors, etc..) according to his requirements, from those available on the market.

In particular, the device comprises an electromagnetic high pressure pump 12, an injection pressure controller 14 with relative atomising nozzle, a sensor 16 and a tank 11 for the hydro-alcoholic solution.

The device preferably also comprises a switch 18, which can be operated at will by the vehicle driver, which allows the intervention of the device to be activated or deactivated.

The Applicant has surprisingly found that the injection of said hydro-alcoholic solution in the envisaged point according to the invention allows considerable and unexpected advantages to be obtained.

The hydro-alcoholic solution, in fact, notwithstanding the compression to which it was subjected when passing through the pump 12, is much less heated than when the same is injected upstream of the turbo-compressor or the heat exchanger and it therefore exerts a cooling action of the air-solution blend before entering the cylinder, which is much more effective compared to that of the known art, bringing the temperature of the air volume sucked by the engine cylinder to values lower than 60°C instead of the usual 80-100°C. The device consequently requires a highly reduced amount of water with respect to the usual quantity. With the same amount of alcohol which is established in a straight ratio with that of the gas oil, according to the known technique, the water percentage in the hydro-alcoholic solution ranges from 40 to 60 %, preferably from 45 to 55%, even more preferably around 50%, compared to 90% of the known art. This characteristic also allows the use of the device of the invention in uses characterized by long road distances and on vehicles of modest dimensions, as the device requires a tank for the hydro-alcoholic solution having the same capacity as that of gas oil, which is a solution practicable on all types of vehicles, thanks to the reduced encumbrance volume.

The efficacy of the above cooling also keeps the combustion temperature and combustion gas pressure at lower levels with respect to the usual values: this characteristic allows the engine to be subjected to less stress at the same power supply, or to have an increase in the power supplied of 10 to 20%, depending on the engine, with the same stress as known engines, and, in short, to obtain a considerable saving of fuel. In the latter case, i.e. when the advantage of a lower fuel consumption is preferred over a possible increase of performances, it is advisable to effect a different calibration of the control systems of the gas oil feeding, preferably also including the injection central board.

Not only the engine, but also the other parts of the equipment, prove to be less stressed, in particular the heat exchanger: in order to obtain the same performances of the engine of the invention with normal engines, the blend of air and hydro-alcoholic solution at the inlet of the exchanger should in fact be brought to pressure values in the order of 4.5 bars, so as to compromise the mechanical resistance of the heat exchanger within relatively short times.

The Applicant effected and provided for the implementation of a series of laboratory and road tests, in order to identify, describe and quantify some of the advantages which can be obtained by means of the engine according to the invention.

At the beginning, the Applicant assembled the invention device on an Alfa Romeo GT 1.9 JTD M-Jet vehicle.

Table 1 below shows the results obtained, with (CD) and without (SD) the insertion of the device.

**Table 1**

| Performance | SD | CD |
|---|---|---|
| Maximum supplied power (cv) | 152 | 207 |
| Maximum torque (Kgm) | 34.6 | 47.5 |
| Seconds from 0 to 100 km/h | 9" 34 | 7" 70 |
| Seconds for covering a distance of 1 Km from start-up | 30" 88 | 28" 26 |
| Maximum speed (Km/hour) | 205.2 | 223.6 |

The results obtained are self-explanatory.

The Applicant subsequently ordered a series of tests to be effected by the "Fuel Experimental Station" having a workshop in S. Donato Milanese (Italy).

Another car was delivered to said Experimental Station for measuring the polluting emissions, the dimensional distribution of particulate lower than 10 µm (PM₁₀), the emissions of CO₂ and NO, the fuel consumption and characteristic curves of the engine.

The car used in the test is a recent diesel vehicle, using the "common rail" injection technology having the following characteristics:
- Vehicle FIAT Punto TD 1.3 MJ
- Homologation level EURO IV
- Number plate CS 368 YM
- Kilometres effected 1,590 Km
- Piston displacement 1.248 cc
- Nr. of cylinders/Nr. of valves per cylinder 4/4
- Maximum power (kW/rpm) 51/4,000
- Maximum torque (Nm/rpm) 180/1,750
- Induction/Injection TD/Common rail
- Oxidation catalysts (Y/N) Y

The tests were carried out first on a vehicle with standard equipment, then on a vehicle equipped with the device according to the invention.

The vehicle was fed with commercial gas oil known on the market as Blu Diesel AGIP, characterized in the laboratory by means of normalized chemical methods in order to verify compliance to the European regulation EN 590, currently in force: only the temperature value at which 95% (distillation) is recovered was slightly higher than the specification limit, but, in any case, within the precision limit of the standard method.

Table 2 below shows some of the characteristics of said combustion.

**Table 2**

| Parameter | m.u. | Method | Gas oil | Limits |
|---|---|---|---|---|
| Density @ 15°C | Kg/m³ | UNI EN ISO 12185 | 834.1 | 820-845 |
| Sulphur content | mg/Kg | ISO 20884 | 9.5 | ≤ 50 |
| Cetane number | | ISO 5165 | 53.1 | ≥ 51.0 |
| Distillation | | | | |
| Starting point | °C | | 204.8 | |
| T50 (50% vol. evaporates) | °C | | 277.4 | |
| T95 (95% vol. evaporates) | °C | | 362.7 | |
| Final temperature | °C | | 368.2 | |
| 95% recovered @ | °C | | 362.7 | ≤ 360 |

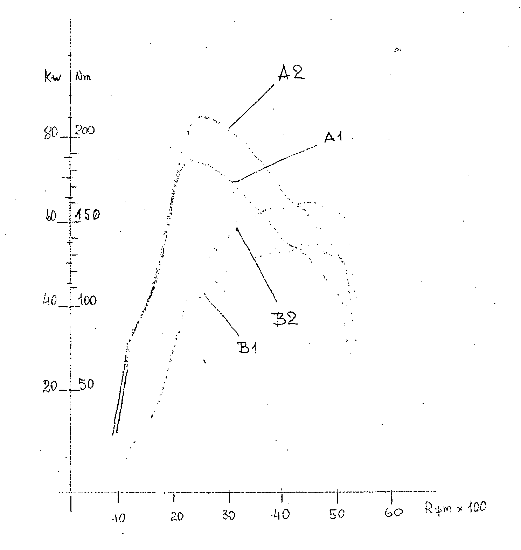

Figure 2 graphically shows the trend of the power curves (A-Kw) and torque (B-Nm) supplied by the engine without the device, curves A1 and B1, and with the device inserted, curves A2 and B2, respectively.

It can be seen that, with the insertion of the device, the power supplied passes from 75 to 85 kw (+13%) and the torque developed from 136 Nm to 155 Nm (+13.9%) substantially at the same revs (rpm) of the engine for the torque, with a slight increase in revs for the power.

The evaluation of the emissions was carried out by applying conventional and codified test procedures for the sampling and analysis of the polluting species, assuming, as reference, the test vehicle in its standard configuration, without the device according to the invention.

Each test was effected by carrying out the European standard driving cycle (cycle NEDC as per Dir. 98/69/CE) applying the sampling procedure ECE 15 (as per Dir. 91/441/CEE) sub-dividing the cycle into two phases, the urban phase (UDC= Urban Driving Cycle) and extra-urban (EUDC =Extra-Urban Driving Cycle).

The above procedure consists in driving the car in a simulated run on a roll dynamometric bench, suitably calibrated, along the urban guiding cycle, repeated four times, followed by an extra-urban guiding cycle.

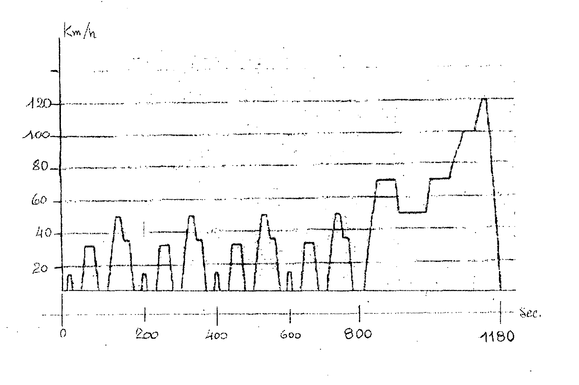

Figure 3 graphically illustrates, in a diagram times/speed, the above ECE 15 cycle of the test: the representation is self evident, and does not require any further explanation.

The vehicle, in its standard configuration, i.e. without the device of the invention, effected three tests to verify the repetitiveness of the results.

Subsequently, the device according to the invention was installed on the vehicle; the tank containing the hydro-alcoholic solution was placed on a scale in order to measure the consumption of said solution. The solution was a mixture of demineralized water (50% by volume), methanol (97% by volume) and isobutanol (3% by volume) available on the market under the name of Amiba 97.

At the end of the first test cycle with the device inserted, the electronics of the device proved to be unsuitable for the service required in the urban cycle and, therefore, was disconnected. As a result of the above, the further two tests envisaged were not effected and the following tables consequently indicate a comparison between the average value of the data obtained in the three tests without the device and the values obtained in the single test effected with the device inserted. As can be seen, the results obtained, however, are such that as the possible difference between the average value of three tests and the value actually measured during the single test effected, is insignificant.

The following Table 3 shows the emission level of the polluting species, detected under SD (without the device) and CD (with the device) conditions.

**Table 3**

| | | UDC Cycle | | EUDC Cycle | | NEDC Cycle | |
|---|---|---|---|---|---|---|---|
| Emission | | SD | CD | SD | CD | SD | CD |
| Carbon monoxide CO | g/km | 0.55 | 0.66 | 0.002 | 0.003 | 0.20 | 0.25 |
| Incombusted THC | g/km | 0.059 | 0.065 | 0.009 | 0.009 | 0.027 | 0.029 |
| Nitrogen oxide NO_{X} | g/km | 0.25 | 0.25 | 0.14 | 0.11 | 0.18 | 0.16 |
| Particulate PM | mg/km | 63 | 47 | 38 | 16 | 47 | 27 |

The considerable abatement of particulate, which is particularly dangerous, can be easily seen, whereas there is a substantial equality in volume of the other pollutants emitted. This decrease is even more notable if we consider that the device was active only during a reduced portion of time of the extra-urban cycle only, about 10% of the total time, i.e. during the slope from 70 to 120 km/h, as can be seen in figure 3.

Table 4 below shows the emission level of carbon dioxide in the two cases under examination.

**Table 4**

| CO₂ emission as g/km | | | |
|---|---|---|---|
| Driving cycle | UDC | EUDC | NEDC |
| Without device | 152 | 95 | 116 |
| With device | 151 | 96 | 116 |

As can be seen, the emission of carbon dioxide does not change with the insertion of the device.

The following table 5 shows the fuel consumption for the two cases under examination.

**Table 5**

| Fuel consumption as liters/100 km | | | | | | |
|---|---|---|---|---|---|---|
| Driving cycle | UDC | | EUDC | | NEDC | |
| Consumption | calculated | measured | calculated | measured | calculated | measured |
| Without device | 5.7 | 5.9 | 3.6 | 3.6 | 4.4 | 4.5 |
| With device | 5.7 | 5.9 | 3.6 | 3.6 | 4.4 | 4.5 |

It can be observed that the fuel consumption did not substantially change after the insertion of the device, notwithstanding the increase in performances of the engine, as shown in figure 2 and in the road tests previously mentioned.

The present invention achieves important advantages, summarized in a considerable increase in power obtained without increasing the fuel consumption, polluting emissions and mechanical stress on the overall engine, and considerably reducing the water volume necessary for the hydro-alcoholic solution.

Not all the possible alternatives to the embodiments of the invention herein specifically described, have been mentioned in the present description.

These possible variations however should be considered as being included in the protection scope of the present patent, as these alternative forms can be easily identified from the description effected herein of the relationship which links each embodiment with the result the invention wishes to obtain.

## Claims

1. A procedure for feeding a diesel-cycle turbo-compressed engine with a hydro-alcoholic solution, comprising the phases of:
- sucking a volume of air from the outside of the engine,
- compressing said sucked air volume at a higher pressure with respect to atmospheric pressure,
- cooling said volume of compressed air to a temperature lower than that reached after said compression,
- sucking said cooled air volume into a combustion cylinder of said engine,
**characterized in that** it comprises the phase of injecting a hydro-alcoholic solution into said cooled air volume before the suction of said cooled air volume into said cylinder.

2. The procedure according to claim 1, **characterized in that** said solution is injected at a pressure ranging from 4 to 15 bar.

3. The procedure according to claim 1, **characterized in that** said solution is injected into said cooled air volume at a temperature not higher than 60°C.

4. The procedure according to claim 1, **characterized in that** a solution is used comprising alcohol in demineralized water in a percentage ranging from 40% to 60% by volume.

5. The procedure according to claim 3, **characterized in that** said solution comprises alcohol in demineralized water in a percentage ranging from 45% to 55% by volume.

6. The procedure according to claim 4, **characterized in that** said alcohol comprises a blend with 97% by volume of methanol and 3% by volume of isobutylene.

7. An injection device for feeding turbo-compressed diesel engines with hydro-alcoholic solutions, comprising:
- a compressor which sucks air from the outside the engine and discharges it at a temperature and pressure higher than the atmospheric values,
- a connecting manifold between said compressor and said engine, which carries said compressed air to a cylinder of said engine,
- a heat exchanger which receives said heated air volume and returns it at a temperature lower than the inlet temperature,
- an injection pump which collects said hydro-alcoholic solution from a tank and sends it to an injector, under pressure,
- an injector which pulverizes said solution and injects it into said air volume,
**characterized in that**
- said injector is inserted into said manifold, in a point between said heat exchanger and the inlet of said cylinder.

8. The injection device according to claim 7, **characterized in that** said injector injects said solution at a injection pressure ranging from 4 to 15 bar.

9. The injection device according to claim 7, **characterized in that** said injector regulates said injection pressure by means of a series of nozzles having a hole with pre-fixed dimensions.

10. The injection device according to claim 9, **characterized in that** said series of nozzles comprises holes having a diameter ranging from 0.3 to 1 mm.

11. The injection device according to claim 7, **characterized in that** its functioning is controlled by an electronic central board.

12. The injection device according to claim 7, **characterized in that** it comprises a pressure sensor inserted into said manifold, in a point between said heat exchanger and the inlet into said cylinder.

13. The injection device according to claim 11, **characterized in that** said central board processes a signal transmitted by said pressure sensor.

14. The injection device according to claim 12, **characterized in that** said pressure sensor is situated upstream of said injector.

15. The injection device according to claim 1, **characterized in that** it comprises an on/off switch.
